# FASCICULE DE BREVET EUROPEEN

(11) **EP 3 237 810 B1**
(45) Date de publication et mention de la délivrance du brevet: **12.03.2025**
(21) Numéro de dépôt: 15828361.4
(22) Date de dépôt: 22.12.2015
(51) Int. Cl.: F24F 11/00

(54) **SYSTÈME DE CONTRÔLE D'INSTALLATIONS DE VENTILATION, INSTALLATION DE VENTILATION COMPRENANT UN TEL SYSTÈME DE CONTRÔLE, ET GAMME**
SYSTEM ZUR STEUERUNG EINER BELÜFTUNGSANLAGE, BELÜFTUNGSANLAGE MIT SOLCH EINEM STEUERUNGSSYSTEM UND BEREICH
SYSTEM FOR CONTROLLING VENTILATION EQUIPMENT, VENTILATION EQUIPMENT INCLUDING SUCH A CONTROL SYSTEM, AND RANGE

(30) Priorité: 23.12.2014 FR 1463183
(43) Date de publication de la demande: 01.11.2017
(73) Titulaire: Amphoux, André, F-75012 Paris (FR)
(72) Inventeur: Amphoux, André, F-75012 Paris (FR)
(74) Mandataire: Derambure Conseil
(86) Numéro de dépôt international: PCT/FR2015/053712
(87) Numéro de publication internationale: WO 2016/102885

(56) Documents cités:
- WO-A1-2007/139507
- WO-A1-2012/000265
- DE-A1- 102008 044 439
- DE-A1- 102010 055 065
- FR-A1- 2 851 641
- FR-A1- 3 001 528
- KR-B1- 101 311 181
- US-A1- 2005 095 978
- US-B1- 6 241 604

## Description

L'invention concerne le domaine des systèmes de contrôle d'installations de ventilation, des installations de ventilation comprenant un tel système de contrôle, et des gammes de telles installations.

Plus précisément, l'invention concerne bâtiment comportant plusieurs espaces intérieurs et étant muni d'au moins une installation de ventilation et d'un système de contrôle de cette au moins une installation de ventilation.

On connait par exemple une installation de ventilation selon FR 2 851 641, dans laquelle la vitesse du ventilateur est déterminée en fonction d'un certain nombre de paramètres tels que, notamment la température extérieure et/ou la vitesse du vent. D'autres paramètres sont susceptibles d'être pris en compte, comme l'heure, l'utilisation du bâtiment, l'occupation, la présence d'individus, une teneur en CO2, des mouvements, ou l'émission de polluants...

Ce brevet, qui définit des grands principes, n'est pas d'application immédiate dans le domaine du bâtiment d'usage collectif. En effet, certains paramètres peuvent être définis de manière macroscopique à l'échelle du bâtiment, comme notamment la température extérieure, l'heure, ou l'utilisation du bâtiment par exemple. Mais d'autres paramètres peuvent varier fortement à l'échelle du bâtiment, comme par exemple la teneur en CO2, voire la vitesse du vent.

Par conséquent, le brevet ci-dessus a été exploité jusqu'à maintenant dans deux configurations distinctes.

Selon une première configuration, le ventilateur est un ventilateur d'extraction associé à une gaine d'extraction desservant une pluralité d'espaces intérieurs, mais une partie seulement de ceux du bâtiment. Ce ventilateur d'extraction est disposé en haut de gaine.

Selon une deuxième configuration, le ventilateur est un ventilateur d'insufflation qui insuffle dans les gaines un air qui va entraîner par un phénomène d'induction l'air provenant des conduits individuels. Un tel ventilateur d'insufflation peut être disposé sur le toit et adresser la totalité des gaines du bâtiment.

Il en ressort que les réglages de ces deux systèmes sont fortement différents, car leurs applications sont différentes.

En terme d'installations de ventilation, on connait également d'autres types de systèmes, tels que des systèmes dits de ventilation « mécanique contrôlée » (« VMC ») comprenant un ventilateur d'extraction d'air, voire un ventilateur d'insufflation d'air (VMC dite « double flux »).

Par conséquent, la logistique associée à ces différents systèmes est complexe, car chacun présente ses propres composants, de sorte que de nombreuses références existent, et par conséquent la maintenance et la gestion du stock sont compliquées. Il existe donc un besoin de simplification.

L'invention est définie par la revendication indépendante 1.

Grâce à ces dispositions, on dispose d'un même système de contrôle qui est adapté à différents types d'installation. Le système de contrôle unique est par conséquent modulaire, et peut s'adapter facilement à un parc existant ainsi qu'aux évolutions futures de celui-ci.

Selon une réalisation, la mémoire est adaptée pour stocker au moins une valeur d'un paramètre climatique d'environnement choisi parmi la température et la vitesse du vent, et notamment pour stocker une valeur d'au moins ces deux paramètres climatiques d'environnement.

Selon une réalisation, la mémoire est adaptée pour stocker en outre au moins une valeur d'au moins un paramètre de l'air ambiant d'un espace intérieur associé audit ventilateur, et le calculateur est adapté pour déterminer la valeur du paramètre de consigne dudit ventilateur à partir en outre de la valeur stockée dudit au moins un paramètre de l'air ambiant associé audit ventilateur.

Selon une réalisation, le paramètre de l'air ambiant d'un espace intérieur associé audit ventilateur comprend l'un, l'autre, ou une combinaison de :
- la température intérieure de l'espace intérieur,
- le taux d'humidité dans l'espace intérieur,
- une concentration d'entité dans l'air ambiant de l'espace intérieur, dans lequel l'entité est choisie parmi un oxyde de carbone, un oxyde d'azote, un formaldéhyde, une fumée.

Selon une réalisation, la sortie est adaptée pour transmettre en direction d'une pluralité de ventilateurs la valeur du paramètre de consigne dudit ventilateur.

Selon une réalisation, le système de contrôle d'installations de ventilation comprend en outre une horloge (7) adaptée pour déterminer une heure, et au moins une règle prédéterminée, et notamment toutes les règles prédéterminées, prennent en compte ladite heure.

Selon une réalisation, un type d'installation de ventilation comprend au moins un ventilateur d'extraction situé au sommet d'un conduit et adapté pour extraire un air d'un espace intérieur via le conduit reliant cet espace intérieur et l'extérieur, par aspiration.

Selon une réalisation, un type d'installation de ventilation comprend au moins un ventilateur d'extraction adapté pour extraire un air d'un espace intérieur via un conduit reliant cet espace intérieur et l'extérieur, par insufflation d'air dans le conduit.

Selon une réalisation, un type d'installation de ventilation comprend au moins un ventilateur d'extraction situé dans un conduit et adapté pour extraire un air d'un espace intérieur via le conduit reliant cet espace intérieur et l'extérieur.

Selon une réalisation, un type d'installation de ventilation comprend au moins un ventilateur d'insufflation adapté pour insuffler un air depuis l'extérieur vers un espace intérieur via un conduit reliant cet espace intérieur et l'extérieur.

Selon une réalisation, le système de contrôle d'installations de ventilation comprend en outre un module de communication avec un serveur distant adapté pour :
- émettre en direction du serveur distant une information relative à une installation de ventilation contrôlée par le système de contrôle (notamment une alerte relative à un dysfonctionnement de l'installation de ventilation et/ou une information permettant au serveur distant de vérifier une bonne opération de l'installation de ventilation) et/ou
- recevoir depuis le serveur distant une information relative à une installation de ventilation contrôlée par le système de contrôle (notamment une valeur d'au moins un paramètre utilisé par le calculateur).

On décrit maintenant brièvement les figures des dessins.
La figure 1 est une vue partielle en perspective d'un exemple de bâtiment.
La figure 2 est une vue partielle d'un premier exemple d'installation de ventilation.
La figure 3 est une vue partielle d'un deuxième exemple d'installation de ventilation.
La figure 4 est une vue schématique d'un exemple de ventilateur.
La figure 5 est une vue schématique d'un système de contrôle.
La figure 6 est une vue schématique d'une architecture d'installation de ventilation.
La figure 7 est une vue partielle d'un troisième exemple d'installation de ventilation.

Ci-après un exposé détaillé de plusieurs modes de réalisation de l'invention assorti d'exemples et de référence aux dessins.

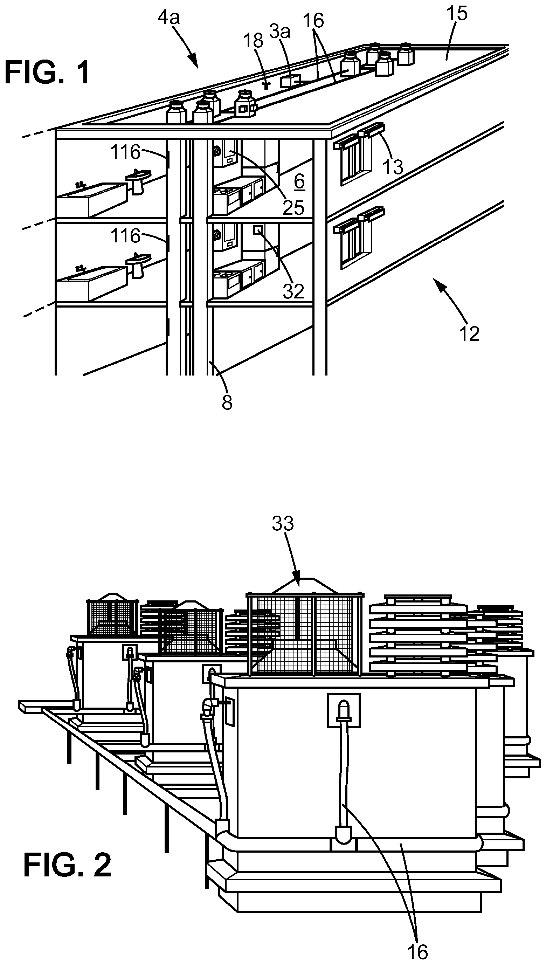

La figure 1 représente schématiquement une partie d'un bâtiment 12. Le bâtiment 12 comprend plusieurs espaces intérieurs 6. Les espaces intérieurs 6 peuvent être entièrement isolés les uns des autres, il peut par exemple s'agir de plusieurs espaces d'occupation disjoints. Le bâtiment 12 comprend par exemple plusieurs logements, et/ou des espaces d'activité humaine (bureaux, magasins, ateliers, ...) Le cas échéant, le bâtiment 12 est un bâtiment d'occupation mixte, comprenant plusieurs types d'espaces d'occupation pris dans la liste ci-dessus. En variante ou en complément, un espace intérieur 6 comprend plusieurs sous-espaces intérieurs 14 qui ne sont que partiellement isolés les uns des autres. Il peut par exemple s'agir de différentes pièces d'un logement. La définition d'un espace intérieur tient plutôt à sa définition juridique et à sa destination économique et/ou sociale. La définition d'un sous-espace intérieur tient plutôt à la mise en œuvre technique concrète des caractéristiques de l'air ambiant et de sa circulation dans l'espace intérieur 6.

Le cas échéant, comme représenté sur la figure 1, les espaces intérieurs 6 sont superposés verticalement les uns aux autres sur plusieurs étages. On a par exemple, au dernier étage, un appartement 6 comprenant deux pièces humides, à savoir une cuisine et une salle de bain, formant donc chacune un sous-espace intérieur 14 d'un même espace intérieur 6. On a, au niveau d'un étage inférieur, par exemple de l'étage directement inférieur, un autre appartement comprenant deux pièces humides, à savoir une cuisine et une salle de bain, formant donc chacune un sous-espace intérieur 14 d'un même espace intérieur 6. Dans le présent exemple de réalisation, les deux cuisines sont superposées, et les deux salles de bain sont superposées. Il pourrait en être autrement.

Le bâtiment 12 comprend une installation de ventilation 4. L'installation de ventilation est, dans cet exemple, d'un premier type, et sera désigné par le suffixe « a » dans les références numériques, pour ce qui est des composants propres à ce type d'installation de ventilation. Les installations de ventilation présentées ici sont indépendantes d'installations de chauffage/climatisation équipant éventuellement le bâtiment ou certains de ses espaces intérieurs.

L'installation de ventilation 4 comprend des conduits 8. Les conduits 8 sont ménagés dans le bâtiment 12. Ils s'étendent sensiblement verticalement entre l'espace intérieur 6 le plus inférieur (rez de chaussée voire sous-sol) desservi et le toit 15 du bâtiment. On a notamment plusieurs conduits 8 débouchant en plusieurs emplacements sur le toit 15 (huit emplacements de débouchés sont représentés sur la figure 1, et deux conduits sont représentés). Chaque conduit 8 peut servir plusieurs espaces intérieurs 6, notamment plusieurs espaces intérieurs superposés. Dans l'exemple précis, un des conduits sert les deux cuisines, superposées, des deux appartements superposés. Un même espace intérieur 6 peut être servi par plusieurs conduits 8, comme également représenté. En effet, dans l'exemple précis, un des conduits sert les deux salles de bain, superposées, des deux appartements superposés. Une bouche d'extraction 116 sert d'interface entre l'espace intérieur 6 et le conduit 8 considéré. La bouche d'extraction 116 est éventuellement réglable pour adapter la section transversale de passage d'air entre l'espace intérieur 6 et le conduit 8. Des appareils à combustion à gaz 25 peuvent également être raccordés aux conduits 8. Un extracteur 33 est prévu en extrémité de chaque conduit 8. On utilise notamment un extracteur statique, ie sans assistance mécanique, par lequel l'écoulement naturel d'air au niveau de l'extracteur génère un flux d'air dans le conduit 8.

L'installation comprend également des entrées d'air 13. Par exemple, chaque espace intérieur comprend au moins une entrée d'air 13, représentée ici schématiquement sous la forme d'une bouche d'aération au niveau de fenêtres de la cuisine. D'autres modes de réalisation sont possibles. La bouche d'entrée d'air 13 est éventuellement réglable pour adapter la section transversale de passage d'air entre l'extérieur et l'espace intérieur 6.

Les autres composants de l'installation de ventilation 4a sont visibles également sur la figure 2. L'installation de ventilation 4a comprend un ventilateur 3a desservant une pluralité de conduits 8. L'installation de ventilation 4a est un système à induction d'air, par lequel un flux d'air dans le conduit est assisté par un flux d'air d'assistance généré dans chaque conduit desservi. Pour cela, le ventilateur 3a est relié fluidiquement avec chaque conduit 8, et est adapté pour générer dans chaque conduit un flux d'air ascendant. Le ventilateur 3a est relié aux différents conduits 8 par l'intermédiaire d'une tuyauterie 16. La tuyauterie 16 est disposée et assemblée au toit de manière à résister aux intempéries, rayons ultra-violets ou autres conditions adverses. L'installation de ventilation est donc ici un système hybride, pouvant prendre alternativement un mode de fonctionnement naturel (ventilateur arrêté) ou un mode de fonctionnement mécaniquement assisté (ventilateur en marche).

Comme on peut le voir notamment sur la figure 1, un même ventilateur 3a adresse une pluralité de conduits 8 qui, eux-mêmes, adressent une pluralité de sous-espaces intérieurs 14, voire d'espaces intérieurs 6.

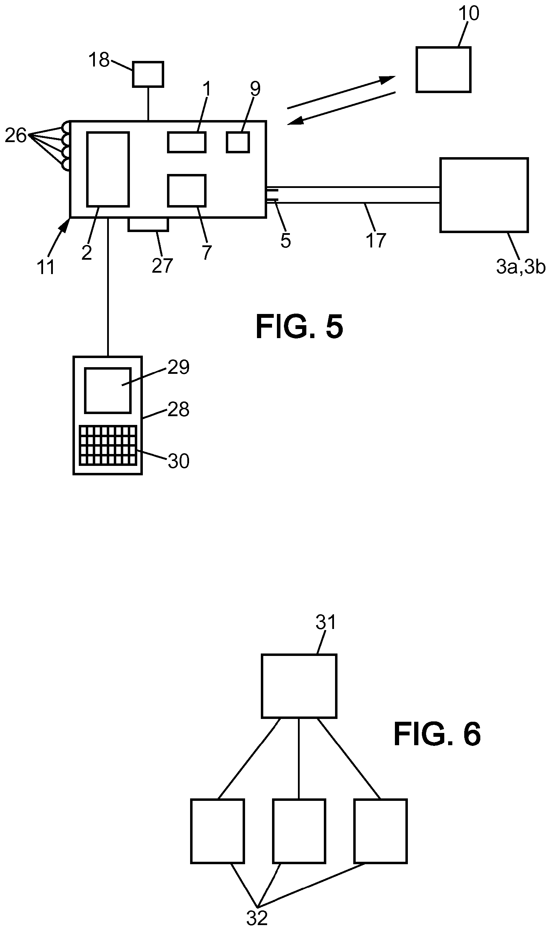

La figure 5 représente schématiquement un système de contrôle 11 de l'installation de ventilation 4a. le système de contrôle 11 est relié au secteur, ou fonctionne sur batterie. Le système de contrôle 11 est adapté pour contrôler le fonctionnement du ventilateur 3a. Le système de contrôle 11 peut être disposé sur le toit, où dans un local technique du bâtiment 12, s'il est relié électriquement au ventilateur 3. Le système de contrôle 11 comprend un calculateur 2 adapté pour déterminer une valeur d'un paramètre de consigne de fonctionnement du ventilateur 3a de l'installation de ventilation 4a. Le paramètre de consigne de fonctionnement peut être un paramètre absolu, comme un paramètre dont la valeur est directement représentative de la puissance ou de la vitesse de ventilation du ventilateur 3a. Il peut être également un paramètre relatif, comme un paramètre dont la valeur indique une augmentation ou une diminution de la puissance ou de la vitesse de ventilation actuelle du ventilateur 3a. Il peut s'agir d'un booléen, d'un réel, d'une fonction, ...

Le système de contrôle 11 est relié par l'intermédiaire d'un organe de raccord 17 au ventilateur 3a. Le système de contrôle 11 comprend donc un organe de sortie 5 pour sa liaison à l'organe de raccord 17. L'organe de raccord 17 est par exemple filaire, mais on pourrait en variante prévoir un système sans fil, auquel cas l'organe de sortie 5 est un émetteur.

La valeur du paramètre de consigne de fonctionnement du ventilateur 3a est déterminée par le calculateur 2 adapté pour déterminer, à partir de valeurs de plusieurs paramètres et d'une règle prédéterminée.

Le système de contrôle 11 comprend donc une mémoire 1 stockant les valeurs de plusieurs paramètres et une ou plusieurs règles prédéterminées. Les règles prédéterminées sont par exemple applicables à certains seulement de différents types d'installation de ventilation.

Un premier paramètre stocké est relatif au type d'installation de ventilation contrôlé par le système de contrôle 11. Ainsi est stocké en mémoire, dans le cas présent, le fait que l'installation de ventilation 4a est une installation à induction d'air. Cet exemple pourrait être raffiné en précisant d'autres particularités de l'installation de ventilation 4a, tel que la version, ou autre.

Un paramètre stocké est relatif à un paramètre climatique d'environnement. Un paramètre climatique d'environnement est relatif au climat au niveau du bâtiment 12. La valeur du paramètre climatique d'environnement peut par exemple être fournie par un capteur local 18 raccordé au système de contrôle 11. On peut par exemple penser à une température extérieure mesurée par un thermomètre, une vitesse de vent mesurée par un anémomètre, un taux d'humidité ambiante mesuré par un hygromètre, ...

En variante ou en complément, le paramètre climatique d'environnement pourrait être fourni par les technologies de l'information à partir d'un serveur distant 10 communiquant avec le système de contrôle 11 par l'intermédiaire d'un module de communication 9 de celui-ci. Ceci pourrait être notamment le cas de la température et/ou du taux d'humidité au niveau du bâtiment.

Le cas échéant, le calculateur 2 est adapté pour faire un pré-traitement des valeurs relatives au paramètre climatique d'environnement. Ceci pourrait être notamment le cas de la valeur de vitesse de vent, pour prendre en compte les bourrasques ou les turbulences fréquentes dans ce genre d'espace.

Ainsi, selon un premier exemple, le calculateur 2 peut déterminer un paramètre de consigne de fonctionnement du ventilateur 3a (vitesse de rotation d'une turbine du ventilateur, puissance de fonctionnement, débit d'air généré, ..) parmi 5 valeurs à partir de données de température extérieure et de vitesse du vent selon la table suivante (T1<T2<T3<T4<T5<T6, 0<v1<v2<v4<v4, 0<K1<K2<K3<K4) :

| Température : Vent | ]T1 ; T2[ | [T2 ; T3[ | [T3 ; T4[ | [T4 ; T5[ | [T5 ; T6[ |
|---|---|---|---|---|---|
| [0 ; v1[ | 0 | K2 | K3 | K4 | 0 |
| [v1 ; v2[ | 0 | K1 | K2 | K3 | 0 |
| [v2 ; v3[ | 0 | 0 | K1 | K2 | 0 |
| [v3 ; v4[ | 0 | 0 | 0 | 0 | 0 |

Ainsi, plus le vent est faible, plus une assistance importante est nécessaire au niveau du ventilateur 3a. Cette commande est toutefois modulée pour prendre en compte la température. En cas de température ambiante trop importante ou trop basse (T1 ou T6 sont éventuellement illimités), le ventilateur peut être arrêté pour éviter les dysfonctionnements. Dans la plage de température ambiante de fonctionnement, plus la température ambiante est élevée, plus une assistance importante est nécessaire au niveau du ventilateur 3a. En outre, on peut prendre en compte une possibilité de délestage, à partir d'une température prédéterminée, où l'on peut admettre que l'aération peut se faire par ouverture des fenêtres.

Si le ventilateur permet plus de 4 vitesses différentes, la table ci-dessus pourra être adaptée.

Cette détermination est faite périodiquement, par exemple toutes les minutes.

Un autre paramètre pouvant être pris en compte par le calculateur 2 est l'heure. Pour cela, le système de contrôle 11 peut comporter une horloge 9, et/ou peut recevoir une information relative à l'heure depuis le serveur distant 10.

L'information relative à l'heure peut être prise en compte pour augmenter la ventilation aux heures où une occupation probable du bâtiment 12 peut présager de la nécessité d'une ventilation. Dans un immeuble d'habitation, il peut par exemple s'agir des heures de repas, et/ou des heures de bain. Le calculateur 2 peut par exemple, dans les créneaux horaires pré-programmés, augmenter d'un niveau la consigne de fonctionnement, quand c'est possible.

Dans l'exemple présenté, le calculateur 2 et la mémoire 1 sont regroupés dans un boîtier principal 31. Le boîtier principal 31 peut également loger d'autres composants. Toutefois, en variante, ces différents composants pourraient être distribués.

Le cas échéant, le système de contrôle 11 pourrait contrôler plusieurs installations de ventilation telles que celle qui vient d'être décrite, notamment des installations de ventilation de bâtiments voisins d'un même ensemble de bâtiments. Dans ce cas, le système de contrôle 11 peut émettre la même consigne en direction des ventilateurs 4a associés aux différents bâtiments, ou des consignes différentes, car certains paramètres, comme les heures d'assistance renforcée, ou la vitesse du vent, pourraient différer selon les bâtiments (différentes hauteurs, différents emplacements, différents types d'occupation, ...).

Le module de communication 9 peut émettre en direction du serveur distant 10 une information relative à une installation de ventilation 4a contrôlée par le système de contrôle, notamment une alerte relative à un dysfonctionnement de l'installation de ventilation et/ou une information permettant au serveur distant de vérifier une bonne opération de l'installation de ventilation.

Selon un mode de réalisation particulier, l'installation de ventilation 4 comprend, comme indiqué ci-dessus, des bouches d'entrée 13 et/ou d'extraction 116 réglables. Le système de contrôle 11 comprend, outre le boîtier principal 31 décrit ci-dessus, un boîtier individuel 32 propre à chaque espace intérieur 6. Chaque boîtier individuel 32 est associé au boîtier principal 31. Le boîtier individuel 32 est adapté pour gérer les caractéristiques de la ventilation propre à l'espace intérieur 6. A ce titre, il peut contrôler l'ouverture/la fermeture sélective d'une ou plusieurs bouches 13, 116 de l'espace intérieur 6. Le boîtier individuel 32 est disposé dans l'espace intérieur 6. Il comprend un processeur, une mémoire, et est adapté pour contrôler l'ouverture/la fermeture de la bouche en fonction d'un certain nombre de paramètres, notamment d'un paramètre représentatif de l'espace intérieur 6, ou du sous-espace intérieur 14 associé à la bouche en question. Le paramètre représentatif en question est par exemple la température de l'air, le degré d'humidité de l'air, une concentration en un ou plusieurs polluants (le CO, le CO2, le formaldéhyde, un composant organique, les fumées, ...) de l'air à l'intérieur de l'espace intérieur 6.

Par ailleurs, le boîtier individuel 32 peut être associé au boîtier principal 31, afin d'utiliser comme paramètre additionnel une vitesse de fonctionnement actuel du ou des ventilateurs 3a associés à l'espace intérieur 6.

Cette architecture permet à la fois de piloter la ventilation au niveau du bâtiment et d'individualiser celle-ci au niveau de chaque espace intérieur, selon les spécificités qui lui sont propres, ce qui permet à terme une optimisation énergétique à l'échelle du bâtiment et pour chaque occupant pris individuellement.

Le cas échéant, l'installation de ventilation comprend également un système d'insufflation d'air comprenant un ventilateur d'insufflation d'air. Dans ce cas, celui-ci peut être contrôlé par le système de contrôle selon des règles prédéfinies. On peut par exemple prévoir les mêmes règles que pour l'extraction.

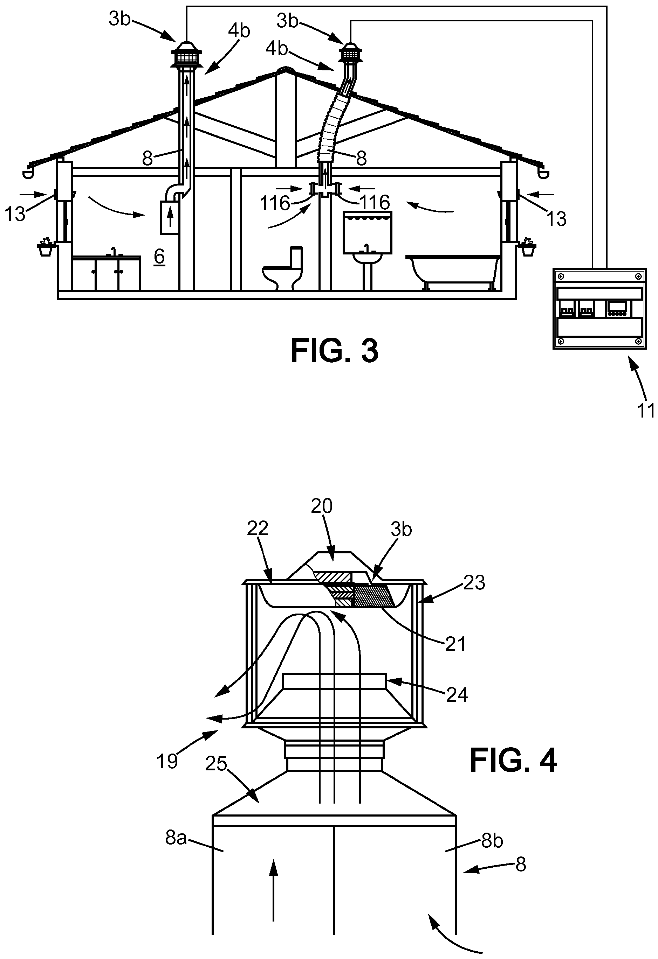

La figure 3 représente schématiquement un deuxième exemple d'installation de ventilation. L'installation de ventilation est, dans cet exemple, d'un deuxième type, et sera désigné par le suffixe « b » dans les références numériques, pour ce qui est des composants propres à ce type d'installation de ventilation.

Dans ce cas, on n'a pas recours à un ventilateur générant une induction d'air dans une pluralité de conduits, comme précédemment. Ici, on dispose d'un ventilateur 4b associé à chaque conduit 8. L'extraction d'air se fait par aspiration. Un exemple d'un tel ventilateur 4b est par exemple donné à la figure 4.

Plus précisément, la figure 4 représente un extracteur 19 comprenant :
- un moteur 20 rotor stator qui entraîne une turbine 21 à pale radiale, l'ensemble étant protégé par un ensemble protecteur 22, par exemple comprenant des coupelles en aluminium,
- un grillage anti volatile 23,
- une embase à effet venturi 24 par exemple circulaire en aluminium,
- éventuellement une pièce d'adaptation 25 en aluminium, (rectangulaire ou carré à sa base, circulaire en partie haute) de forme aéraulique, permettant de s'adapter à la section rectangulaire du conduit 8.

Ainsi, l'extracteur 19 se fixe directement en débouché du conduit 8. La figure 3 représente le cas d'un extracteur individuel. La figure 4 représente en variante l'extracteur 19 branché en sortie d'un conduit collectif. Plus précisément, le conduit 8 comprend une portion collective 8a s'étendant verticalement sur plusieurs étages, les espaces intérieurs 6, à différents niveaux (différentes hauteurs), débouchant dans la portion collective 8a. Une portion individuelle 8b adjacente à la portion collective 8a, dessert le dernier étage. Une telle configuration de conduit peut également s'appliquer à la ventilation par induction d'air, comme représenté sur les figures 1 et 2.

Le système de contrôle 11 peut être le même système de contrôle que celui décrit précédemment pour l'installation de ventilation présentée en relation avec la figure 1. Toutefois, en variante, on peut prévoir des règles prédéterminées spécifiques à ce type d'installation de ventilation. Par exemple, le ventilateur 3b pourrait n'opérer qu'en mode tout-ou-rien.

Ainsi, selon cet exemple, le calculateur 2 peut déterminer un paramètre de consigne de fonctionnement du ventilateur 4a parmi deux valeurs à partir de données de température extérieure et de vitesse du vent selon la table suivante (T1<T2<T3<T4<T5<T6, 0<v1<v2<v4<v4) :

| Température : Vent | ]T1 ; T2[ | [T2 ; T3[ | [T3 ; T4[ | [T4 ; T5[ | [T5 ; T6[ |
|---|---|---|---|---|---|
| [0 ; v1[ | 0 | 1 | 1 | 1 | 0 |
| [v1 ; v2[ | 0 | 1 | 1 | 1 | 0 |
| [v2 ; v3[ | 0 | 0 | 0 | 1 | 0 |
| [v3 ; v4[ | 0 | 0 | 0 | 0 | 0 |

| | | | | | |
|---|---|---|---|---|---|
| « 1 » représente un entraînement actif de la turbine par le moteur. « 0 » représente le fait qu'il n'y a pas d'entraînement actif de la turbine par le moteur, ce qui, toutefois, n'empêche pas une rotation libre de la turbine. | | | | | |

Les valeurs réglées pour T1-T6 et v1-v4 pourraient être les mêmes que dans le premier exemple, ou différentes.

Comme on le voit, le comportement dans les plages [T2 ; T3[ et [T2 ; T4[ sont les mêmes, de sorte qu'il n'est pas nécessairement utile de programmer indépendamment ces deux plages, et que la table pourrait se présenter à l'aide d'une unique colonne [T2 ; T4[. Une remarque similaire peut être faite à propos des plages [0 ; v1[ et [v1 ; v2[. Toutefois, utiliser, dans le deuxième exemple, le même découpage que pour le premier exemple contribue à la versatilité de la mise en œuvre.

Dans cet exemple, l'horloge pourrait être utilisée pour forcer la mise en œuvre du ventilateur selon certains créneaux horaires, dans les cas où la règle ci-dessus prévoit, pour les paramètres climatiques donnés, une absence de mise en œuvre du ventilateur.

Dans cet exemple, le système de contrôle 11 peut être amené à contrôler plusieurs ventilateurs indépendants, par exemple tous disposés sur un même toit. Dans ce cas, tous les ventilateurs peuvent être soumis à la même consigne. En variante, les ventilateurs peuvent être soumis à des consignes individualisées, ou groupées. Le système de contrôle peut sélectionner une règle prédéterminée à appliquer à un ventilateur ou un groupe de ventilateurs donnés parmi une pluralité de règles prédéterminées. Par exemple, la mémoire 1 peut stocker l'information, fournie au moment de la mise en place et de la configuration du système, qu'un ventilateur donné 3b est associé à un type de pièce donnée, par exemple une cuisine, et appliquer une règle horaire fonction du type de pièce associée.

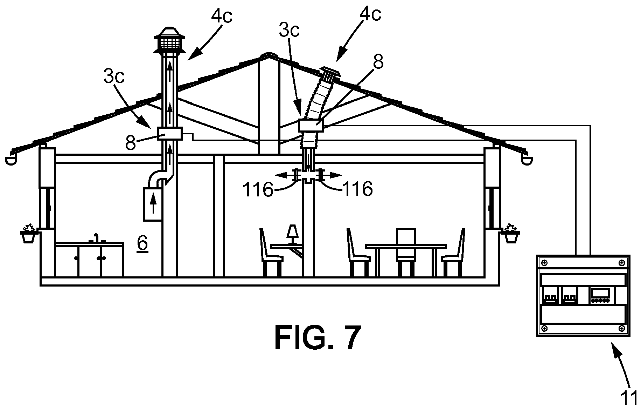

Selon un troisième exemple d'installation de ventilation, représenté sur la figure 7, on peut mettre en œuvre un système dit de ventilation mécanique contrôlée, par exemple haute pression ou basse pression. L'installation de ventilation 4c est, dans cet exemple, d'un troisième type, et sera désigné par le suffixe « c » dans les références numériques, pour ce qui est des composants propres à ce type d'installation de ventilation. Dans un tel système, le ventilateur d'extraction 3c est disposé directement sur le trajet de l'air extrait en direction de l'extérieur. L'installation peut ne comprendre qu'une extraction d'air. En variante, comme représenté, on peut prévoir un système dit « double flux », comprenant également une insufflation d'air (ventilateur d'insufflation 3c de droite sur le dessin). L'installation d'amenée d'air extérieur, par conduit d'insufflation de l'air dans l'espace intérieur desservi, met en œuvre un couplage de l'asservissement du débit insufflé au boitier de commande 11.

Quel que soit le type d'installation de ventilation contrôlé, le système de contrôle pourra présenter un certain nombre de fonctions communes à ceux-ci :
- A l'installation, on prévoit une initialisation à 0 des différents paramètres. Si le système de contrôle 11 comporte des diodes 26, un affichage de contrôle peut être activé, par exemple toutes les diodes s'allument.
- Le système de contrôle 11 comprend une interface utilisateur permettant d'enregistrer dans la mémoire un certain nombre d'informations relatives à l'installation de ventilation. Cette saisie est faite par exemple via le serveur distant 10, ou par l'intermédiaire d'un clavier 27 du système de contrôle 11. On saisit par exemple le nombre de ventilateurs contrôlés par le système de contrôle. Le système de contrôle 11 peut tester à l'initialisation la réponse des ventilateurs. Par exemple, en cas de réponse correct des ventilateurs, une diode 26 s'allume. On peut par exemple prévoir une diode par ventilateur ou, par exemple, une réponse temporelle. Par exemple, pendant la 1ère seconde (ou autre période de temps), la diode 26 s'allume pour dire que le premier ventilateur est prêt ; pendant la 2ème seconde, la même diode reste allumée dans le cas où le deuxième ventilateur est prêt, et ainsi de suite jusqu'à ce que tous les ventilateurs aient été analysés et le cycle se finit par une séquence remarquable de la diode [NB : cette mise en œuvre nécessite un adressage des ventilateurs] ;
- A l'initialisation, prévoir une séquence particulière (test) de fonctionnement du ventilateur ;
- Fréquence d'interrogation/stockage des paramètres climatiques d'environnement ;
- Calcul statistique des valeurs des paramètres climatiques d'environnement (par exemple moyenne glissante sur une durée donnée, par exemple 30 dernières secondes, de la valeur de vitesse du vent) ;
- Modification possible des règles relatives à l'horloge - prise en compte du passage heure d'été/heure d'hiver ;
- Enregistrement d'une alerte en cas de dysfonctionnement (échec des phases de test, de l'interrogation du serveur distant ou des capteurs, batterie vide en cas de fonctionnement sur batterie ...)

Dans les cas où le ventilateur permet plusieurs vitesses, le système de contrôle pourra, à l'initialisation, tester l'accélération/la décélération.

Le cas échéant, le système de contrôle 11 est associé à un terminal 28 déporté. Le terminal 28 peut comprendre un écran 29 d'affichage et une interface de saisie 30, ce qui permet de s'affranchir d'un organe de saisie et de LEDs sur le système de contrôle lui-même.

L'écran 29 peut afficher un certain nombre d'informations représentatives du système de contrôle, telles que :
- La version du programme et la date de transfert,
- L'heure,
- La vitesse instantanée du vent,
- La vitesse moyenne du vent (sur une période donnée),
- La température extérieure,
- Des informations relatives au fonctionnement de chaque ventilateur (instantané - ou statistique, durée pour chaque mode de fonctionnement, horaires de mise en oeuvre, consommation électrique, ...).

L'interface de saisie 30 peut être utilisée pour sélectionner les informations à afficher. Elle peut être utilisée également pour modifier le fonctionnement, forcer le ventilateur, ...) Elle peut être utilisée notamment lors du branchement du système de contrôle sur le terminal déporté 28, pour sauvegarder les informations contenues dans la mémoire 1 sur le terminal déporté 28.

## Revendications

1. Bâtiment comportant plusieurs espaces intérieurs (6) et étant muni d'au moins une installation de ventilation (4a, 4b, 4c) et d'un système de contrôle de cette au moins une installation de ventilation, ledit système comprenant :
- un boitier principal (31) qui comprend :
• une mémoire (1) adaptée pour stocker au moins une valeur d'au moins un paramètre climatique d'environnement, et une valeur relative à un type d'installation de ventilation,
• un calculateur (2) adapté pour déterminer, à partir au moins des valeurs stockées d'au moins un paramètre climatique d'environnement et relatives à un type d'installation de ventilation, et à partir de plusieurs règles prédéterminées associées respectivement à différents types d'installation de ventilation, au moins une valeur d'au moins un paramètre de consigne de fonctionnement d'au moins un ventilateur (3a, 3b, 3c) de ladite au moins une installation de ventilation (4a, 4b, 4c),
- une sortie (5) adaptée pour transmettre en direction dudit au moins un ventilateur (3a, 3b, 3c) la valeur déterminée pour un paramètre de consigne de fonctionnement associé,
- un boîtier individuel (32) propre à chaque espace intérieur (6) et adapté pour contrôler l'ouverture/la fermeture d'une ou plusieurs bouches (13, 116) de l'espace intérieur (6), chaque boîtier individuel (32) étant associé audit boîtier principal (31).

2. Bâtiment selon la revendication 1, dans lequel la mémoire (1) est adaptée pour stocker au moins une valeur d'un paramètre climatique d'environnement choisi parmi la température et la vitesse du vent, et notamment pour stocker une valeur d'au moins ces deux paramètres climatiques d'environnement.

3. Bâtiment selon la revendication 1 ou 2, dans lequel la mémoire (1) est adaptée pour stocker en outre au moins une valeur d'au moins un paramètre de l'air ambiant d'un espace intérieur (6) associé audit ventilateur (3a, 3b, 3c), et dans lequel le calculateur est adapté pour déterminer la valeur du paramètre de consigne dudit ventilateur à partir en outre de la valeur stockée dudit au moins un paramètre de l'air ambiant associé audit ventilateur.

4. Bâtiment selon la revendication 3, dans lequel le paramètre de l'air ambiant d'un espace intérieur associé audit ventilateur comprend l'un, l'autre, ou une combinaison de :
- la température intérieure de l'espace intérieur,
- le taux d'humidité dans l'espace intérieur,
- une concentration d'entité dans l'air ambiant de l'espace intérieur, dans lequel l'entité est choisie parmi un oxyde de carbone, un oxyde d'azote, un formaldéhyde, une fumée.

5. Bâtiment selon l'une des revendications 1 à 4, dans lequel la sortie (5) est adaptée pour transmettre en direction d'une pluralité de ventilateurs (3a, 3b, 3c) la valeur du paramètre de consigne dudit ventilateur.

6. Bâtiment selon l'une des revendications 1 à 5, comprenant en outre une horloge (7) adaptée pour déterminer une heure, et dans lequel au moins une règle prédéterminée, et notamment toutes les règles prédéterminées, prennent en compte ladite heure.

7. Bâtiment selon l'une des revendications 1 à 6, dans lequel un type d'installation de ventilation comprend au moins un ventilateur (3b) d'extraction situé au sommet d'un conduit (8) et adapté pour extraire un air d'un espace intérieur (6) via le conduit (8) reliant cet espace intérieur et l'extérieur, par aspiration.

8. Bâtiment selon l'une des revendications 1 à 7, dans lequel un type d'installation de ventilation comprend au moins un ventilateur (3a) d'extraction adapté pour extraire un air d'un
espace intérieur (6) via un conduit (8) reliant cet espace intérieur et l'extérieur, par insufflation d'air dans le conduit (8).

9. Bâtiment selon l'une des revendications 1 à 8, dans lequel un type d'installation de ventilation comprend au moins un ventilateur (3c) d'extraction situé dans un conduit (8) et adapté pour extraire un air d'un espace intérieur (6) via le conduit (8) reliant cet espace intérieur et l'extérieur.

10. Bâtiment selon l'une des revendications 1 à 9, dans lequel un type d'installation de ventilation comprend au moins un ventilateur (3c) d'insufflation adapté pour insuffler un air depuis l'extérieur vers un espace intérieur (6) via un conduit (8) reliant cet espace intérieur et l'extérieur.

11. Bâtiment selon l'une quelconque des revendications 1 à 10, comprenant en outre un module de communication (9) avec un serveur distant (10) adapté pour :
- émettre en direction du serveur distant (10) une information relative à une installation de ventilation (4a, 4b, 4c) contrôlée par le système de contrôle (notamment une alerte relative à un dysfonctionnement de l'installation de ventilation et/ou une information permettant au serveur distant de vérifier une bonne opération de l'installation de ventilation) et/ou
- recevoir depuis le serveur distant (10) une information relative à une installation de ventilation contrôlée par le système de contrôle (notamment une valeur d'au moins un paramètre utilisé par le calculateur).

12. Bâtiment selon l'une quelconque des revendications 1 à 11, dans lequel au moins une installation de ventilation (4a, 4b, 4c) comprend au moins un ventilateur (3a, 3b, 3c), et un système de contrôle (11), dans lequel la sortie (5) est associée au ventilateur (3a, 3b, 3c) pour transmettre en direction dudit ventilateur la valeur déterminée pour un paramètre de consigne de fonctionnement du ventilateur.

13. Bâtiment selon la revendication 12, comprenant plusieurs installations de ventilation (4a, 4b, 4c) de types différents, les systèmes de contrôle (11) des installations de différents types étant les mêmes.

## Patentansprüche

1. Gebäude mit mehreren Innenräumen (6), das mit wenigstens einer Belüftungsanlage (4a, 4b, 4c) und einem System zur Steuerung dieser wenigstens einen Belüftungsanlage ausgestattet ist, wobei das System umfasst:
- ein Hauptgehäuse (31), das umfasst:
• einen Speicher (1), der dazu ausgebildet ist, wenigstens einen Wert wenigstens eines klimatischen Umgebungsparameters und einen Wert in Bezug auf einen Typ von Belüftungsanlage zu speichern,
• einen Rechner (2), der dazu ausgebildet ist, ausgehend von wenigstens den gespeicherten Werten wenigstens eines klimatischen Umgebungsparameters und in Bezug auf einen Typ von Belüftungsanlage, und aus mehreren vorbestimmten Regeln, die jeweils verschiedenen Typen von Belüftungsanlagen zugeordnet sind, wenigstens einen Wert wenigstens eines Sollparameters für den Betrieb wenigstens eines Ventilators (3a, 3b, 3c) der wenigstens einen Belüftungsanlage (4a, 4b, 4c) zu bestimmen,
- einen Ausgang (5), der dazu ausgebildet ist, den für einen zugeordneten Betriebssollparameter ermittelten Wert in Richtung des wenigstens einen Ventilators (3a, 3b, 3c) zu übertragen,
- ein individuelles Gehäuse (32), das jedem Innenraum (6) eigen ist und dazu ausgebildet ist, das Öffnen/Schließen eines oder mehrerer Auslässe (13, 116) des Innenraums (6) zu steuern, wobei jedes individuelle Gehäuse (32) dem Hauptgehäuse (31) zugeordnet ist.

2. Gebäude nach Anspruch 1, wobei der Speicher (1) dazu ausgebildet ist, wenigstens einen Wert eines klimatischen Umgebungsparameters zu speichern, der aus Temperatur und Windgeschwindigkeit gewählt ist, und insbesondere einen Wert wenigstens dieser beiden klimatischen Umgebungsparametern zu speichern.

3. Gebäude nach Anspruch 1 oder 2, wobei der Speicher (1) dazu ausgebildet ist, ferner wenigstens einen Wert wenigstens eines Parameters der Umgebungsluft eines Innenraums (6) zu speichern, der dem Ventilator (3a, 3b, 3c) zugeordnet ist, und wobei der Rechner dazu ausgebildet ist, den Wert des Sollparameters des Ventilators ferner aus dem gespeicherten Wert des wenigstens einen Umgebungsluftparameters zu bestimmen, der dem Ventilator zugeordnet ist.

4. Gebäude nach Anspruch 3, wobei der dem Ventilator zugeordnete Umgebungsluftparameter eines Innenraums aus folgenden Parametern einen, den anderen oder eine Kombination umfasst:
- die Innentemperatur des Innenraums,
- die Luftfeuchtigkeit im Innenraum,
- eine Konzentration einer Entität in der Umgebungsluft des Innenraums, wobei die Entität gewählt ist aus Kohlenmonoxid, Stickoxid, Formaldehyd, Rauch.

5. Gebäude nach einem der Ansprüche 1 bis 4, wobei der Ausgang (5) dazu ausgebildet ist, in Richtung einer Vielzahl von Ventilatoren (3a, 3b, 3c) den Wert des Sollparameters des jeweiligen Ventilators zu übertragen.

6. Gebäude nach einem der Ansprüche 1 bis 5, ferner umfassend eine Uhr (7), die dazu ausgebildet ist, eine Uhrzeit zu bestimmen, und wobei wenigstens eine vorbestimmte Regel, insbesondere alle vorbestimmten Regeln, die Uhrzeit berücksichtigen.

7. Gebäude nach einem der Ansprüche 1 bis 6, wobei ein Typ von Belüftungsanlage wenigstens einen Abluftventilator (3b) umfasst, der sich am oberen Ende eines Kanals (8) befindet und dazu ausgebildet ist, Luft aus einem Innenraum (6) über den Kanal (8), der diesen Innenraum und den Außenraum verbindet, durch Ansaugen abzusaugen.

8. Gebäude nach einem der Ansprüche 1 bis 7, wobei ein Typ von Belüftungsanlage wenigstens einen Abluftventilator (3a) umfasst, der dazu ausgebildet ist, Luft aus einem Innenraum (6) über einen Kanal (8), der diesen Innenraum und den Außenraum verbindet, durch Einblasen von Luft in den Kanal (8) abzusaugen.

9. Gebäude nach einem der Ansprüche 1 bis 8, wobei ein Typ von Belüftungsanlage wenigstens einen Abluftventilator (3c) umfasst, der sich in einem Kanal (8) befindet und dazu ausgebildet ist, Luft aus einem Innenraum (6) über den Kanal (8), der diesen Innenraum mit dem Außenraum verbindet, abzusaugen.

10. Gebäude nach einem der Ansprüche 1 bis 9, wobei ein Typ von Belüftungsanlage wenigstens einen Einblasventilator (3c) umfasst, der dazu ausgebildet ist, Luft von außen über einen Kanal (8), der diesen Innenraum und den Außenraum verbindet, in einen Innenraum (6) einzublasen.

11. Gebäude nach einem der Ansprüche 1 bis 10, ferner umfassend ein Kommunikationsmodul (9) mit einem entfernten Server (10), das dazu ausgebildet ist:
- in Richtung des entfernten Servers (10) eine Information bezüglich einer vom Steuersystem gesteuerten Belüftungsanlage (4a, 4b, 4c) zu senden (insbesondere eine Warnung bezüglich einer Fehlfunktion der Belüftungsanlage und/oder eine Information, die es dem entfernten Server ermöglicht, einen ordnungsgemäßen Betrieb der Belüftungsanlage zu überprüfen) und/oder
- vom entfernten Server (10) eine Information bezüglich einer vom Steuersystem gesteuerten Belüftungsanlage zu empfangen (insbesondere einen Wert wenigstens eines vom Rechner verwendeten Parameters).

12. Gebäude nach einem der Ansprüche 1 bis 11, wobei wenigstens eine Belüftungsanlage (4a, 4b, 4c) wenigstens einen Ventilator (3a, 3b, 3c) und ein Steuersystem (11) umfasst, wobei der Ausgang (5) dem Ventilator (3a, 3b, 3c) zugeordnet ist, um in Richtung des Ventilators den Wert zu übertragen, der für einen Betriebssollparameter des Ventilators ermittelt wurde.

13. Gebäude nach Anspruch 12, mit mehreren Belüftungsanlagen (4a, 4b, 4c) unterschiedlicher Typen, wobei die Steuersysteme (11) der Anlagen unterschiedlicher Typen identisch sind.

## Claims

1. A building comprising several interior spaces (6) and being provided with at least one ventilation facility (4a, 4b, 4c) and with a system for controlling this at least one ventilation facility, said system comprising:
- a main casing (31) which comprises:
• a memory (1) adapted to store at least one value of at least one environmental climate parameter, and a value relating to a type of ventilation facility,
• a calculator (2) adapted to determine, from at least the stored values of at least one environmental climate parameter and relating to a type of ventilation facility, and from a plurality of predetermined rules associated with different types of ventilation facility respectively, at least one value of at least one setpoint parameter for operation of at least one fan (3a, 3b, 3c) of said at least one ventilation facility (4a, 4b, 4c),
- an output (5) adapted to transmit the value determined for an associated operating setpoint parameter to said at least one fan (3a, 3b, 3c),
- an individual casing (32) specific to each interior space (6) and adapted to control opening/closing of one or more vents (13, 116) of the interior space (6), each individual casing (32) being associated with said main casing (31).

2. The building according to claim 1, wherein the memory (1) is adapted to store at least one value of an environmental climate parameter selected from temperature and wind speed, and especially to store a value of at least these two environmental climate parameters.

3. The building according to claim 1 or 2, wherein the memory (1) is adapted to further store at least one value of at least one parameter of the ambient air of an interior space (6) associated with said fan (3a, 3b, 3c), and wherein the calculator is adapted to determine the value of the setpoint parameter of said fan further from the stored value of said at least one parameter of the ambient air associated with said fan.

4. The building according to claim 3, wherein the parameter of the ambient air of an interior space associated with said fan comprises either, or a combination of:
- the interior temperature of the interior space,
- the humidity level in the interior space,
- a concentration of an entity in the ambient air of the interior space, wherein the entity is selected from carbon monoxide, nitrogen oxide, formaldehyde and smoke.

5. The building according to one of claims 1 to 4, wherein the output (5) is adapted to transmit the value of the setpoint parameter of said fan towards a plurality of fans (3a, 3b, 3c).

6. The building according to one of claims 1 to 5, further comprising a clock (7) adapted to determine a time, and wherein at least one predetermined rule, and especially all predetermined rules, take said time into account.

7. The building according to one of claims 1 to 6, wherein one type of ventilation facility comprises at least one extraction fan (3b) located at the top of a duct (8) and adapted to extract air from an interior space (6) via the duct (8) connecting that interior space and the exterior, by suction.

8. The building according to one of claims 1 to 7, wherein one type of ventilation facility comprises at least one extraction fan (3a) adapted to extract air from an interior space (6) via a duct (8) connecting this interior space and the exterior, by blowing air into the duct (8).

9. The building according to one of claims 1 to 8, wherein a type of ventilation facility comprises at least one extraction fan (3c) located in a duct (8) and adapted to extract air from an interior space (6) via the duct (8) connecting this interior space and the exterior.

10. The building according to one of claims 1 to 9, wherein one type of ventilation facility comprises at least one blowing fan (3c) adapted to blow air from the exterior into an interior space (6) via a duct (8) connecting that interior space and the exterior.

11. The building according to any of claims 1 to 10, further comprising a communication module (9) with a remote server (10) adapted to:
- transmit to the remote server (10) information relating to a ventilation facility (4a, 4b, 4c) controlled by the control system (especially an alert relating to a malfunction of the ventilation facility and/or information enabling the remote server to check that the ventilation facility is properly operating) and/or
- receive from the remote server (10) information relating to a ventilation facility controlled by the control system (especially a value of at least one parameter used by the calculator).

12. The building according to any of claims 1 to 11, wherein at least one ventilation facility (4a, 4b, 4c) comprises at least one fan (3a, 3b, 3c), and a control system (11), wherein the output (5) is associated with the fan (3a, 3b, 3c) to transmit the value determined for a setpoint parameter for operation of the fan towards said fan.

13. The building according to claim 12, comprising a plurality of ventilation facilities (4a, 4b, 4c) of different types, the control systems (11) of the facilities of different types being the same.
